**Europäisches Patentamt**

**European Patent Office**

**Office européen des brevets**

(19)

(11) Publication number : **0 038 022 B2**

(12) # NEW EUROPEAN PATENT SPECIFICATION

(45) Date of publication of the new patent specification : **01.07.92 Bulletin 92/27**

(51) Int. Cl.⁵ : **B32B 27/10, B32B 15/00**

(21) Application number : **81102665.7**

(22) Date of filing : **08.04.81**

(54) **Metallized bonded sheet comprising a polyolefinic film and a paper or paperboard sheet.**

The file contains technical information submitted after the application was filed and not included in this specification

(30) Priority : **11.04.80 IT 2132380**

(43) Date of publication of application : **21.10.81 Bulletin 81/42**

(45) Publication of the grant of the patent : **08.02.84 Bulletin 84/06**

(45) Mention of the opposition decision : **01.07.92 Bulletin 92/27**

(84) Designated Contracting States : **AT BE CH DE FR GB LI NL SE**

(56) References cited :
**DE-A- 2 756 497**
**DE-A- 2 828 576**
**DE-C- 899 166**
**DE-U- 1 883 770**
**DE-U- 7 922 846**

(56) References cited :
**US-A- 3 239 126**
**US-A- 4 211 811**
**"Neue Verpackung" 12/65, pages 1646-1652;**
**"Neue Verpackung" 12/74, pages 1649-1653;**
**"Neue Verpackung" 8/78, pages 1216-1217;**

(73) Proprietor : **Moplefan S.p.A.**
**31, Foro Buonaparte**
**Milan (IT)**

(72) Inventor : **Bordini, Fosco**
**25, Via Montanara**
**Terni (IT)**
Inventor : **Mauri, Luigi**
**16, Piazza del Mercato Nuovo**
**Terni (IT)**
Inventor : **Negri, Luigi**
**666, Viale Edison**
**Sesto San Giovanni Milan (IT)**

(74) Representative : **Barz, Peter, Dr. et al**
**Patentanwälte Dr. V. Schmied-Kowarzik**
**Dipl.-Ing. G. Dannenberg Dr. P. Weinhold Dr. D.**
**Gudel Dipl.-Ing. S. Schubert Dr. P.Barz**
**Siegfriedstrasse 8**
**W-8000 München 40 (DE)**

**EP 0 038 022 B2**

## Description

This invention relates to bonded sheets comprising a polyolefinic film metallized on at least one face and of a paper or paperboard sheet.

DE–A–2 756 497, corresponding to US–A–4 211 811, discloses a bonded sheet consisting essentially of two films, prepared from substantially crystalline polyolefin polymers wherein at least one of the two films is a film oriented by the stretching of polypropylene essentially constituted by isotactic macromolecules and wherein at least one of the two films is coated, on the surface thereof which is in contact with the other film with a metallized layer having a resistivity between 1 and 5 Ohms.

As a consequence of studies and researches in this field it has now been found that it is possible to obtain bonded sheets useful for packaging, endowed with a high capability of retaining the fold.

Thus it is an object of the present invention to provide bonded sheets for packings having a high capability of retaining the fold, a high resistance to gas or vapor diffusion, high antistatic characteristics, high values of thermoweldability and of resistance of the weld along with excellent mechanical and aesthetic properties, comprising two layers and, optionally, an interposed adhesive layer, one of said layers consisting of a polyolefinic film metallized on at least one face, the metallization having a reistivity of from 1 to 5 Ohms and the other layer consisting of a paper or paperboard sheet, characterized in that said paper or paperboard sheet is coated on at least one face with nitrocellulose or a vinyl or vinylidene lacquer.

Olefinic polymers which have proved suitable include crystalline polymers of ethylene, of propylene, ethylene/propylene copolymers containing predominantly propylene either of the block type or of the random type, mixtures of polyethylene or of polypropylene with propylene/ethylene copolymers

The polypropylene employed for preparing the film has a melt index preferably ranging from 0.5 to 20, the polyethylene from 0.5 to 15, the ethylene/propylene copolymers from 7 to 20.

The ethylene content of the copolymers preferably ranges from 0.1 to 15%.

Polyethylene and copolymers are employed in the mixtures at the rate of 1–50% by weight referred to the total mixture.

Each polyolefinic film according to the present invention has a thickness ranging from 10 to 100 $\mu$m.

Metallization is carried out under vacuum using, as a metal, aluminium, zinc, gold, palladium or cadmium, preferably on a film optionally subjected to a treatment with non-perforating electric discharges. The most economical and suitable metallization for packaging is with aluminium.

The paper is to be used for preparing the bonded and laminated sheets according to this invention is of the oiled paper type, of the parchment paper type, and the like, other types of paper and paperboard, especially if light, being suitable too.

The paper coated with nitrocellulose, vinyl or vinylidene lacquers, the latter being applicated from aqueous latexes.

Tackiness-preventing agents, generally consisting of silicone solutions, may be added to the lacquers.

Both the paper sheet and the polyolefinic film can be coated with a thermowelding layer or with a cold adhesive so as to impart to at least one of the outside surfaces of the bonded sheets the weldability necessary for preparing envelopes, boxes and the like.

Coating of the polyolefinic film or of the paper sheet or of both with a thermowelding layer, which can also consist of polyethylene, of ethylene/propylene crystalline co-polymers or of mixtures thereof, is carried out also according to the extrusion coating method.

The bonded sheets are prepared by lamination of the polyolefinic film with the paper or paperboard sheet, either with or without interposed adhesives, by causing them to pass between rollers heated to 30–90° C.

When adhesives are utilized, they are applied to one face of the film or of the paper sheet, according to known methods, in particular by spreading, starting from solutions or dispersions in water or in organic solvents.

Generally, solutions having an adhesive concentration between 5 and 40% by weight are employed, in order to provide an amount of adhesive on the film ranging from 1 to 10 g/m$^2$ of surface.

The adhesives which have proved particularly suited are synthetic adhesives consisting of thermoplastic resins, such as cellulose esters and ethers, acrylic esters, polyamides, polyurethanes, polyesters; or of thermosetting resins, such as epoxy resins, urea/ formaldehyde, phenol/formaldehyde, melamide/formaldehyde resins; or of synthetic rubbers.

As solvents for the adhesive use is made in particular of hydrocarbons, such as ligroin and toluene; or esters such as ethyl acetate or ketones, such as acetone and methyl-ethyl-ketone.

The polyolefin films to be bonded according to the present invention are prepared from olefinic polymers to which prior to filming–conventional additives may be added, such as, for example, opacifiers, stabilizers, lubricants, fillers, organic and inorganic pigments.

The polyolefin films to be bonded may be optionally subjected to a superficial pretreatment with continuous, non-perforating electric discharges, or with chemical agents, in order to increase their adhesive receptivity, and optionally may be lacquered according to conventional methods in order to improve their thermoweldability characteristics.

The films prepared from propylene polymers having a melt index of from 0.5 to 5 can be oriented by stretching in one or two directions according to known methods.

The bonded sheets according to this invention are useful in the field of foodstuff packaging, in particular for manufacturing boxes for biscuits.

The capability of the bonded sheet to retain the fold is evaluated by square bending a sample of 20 x 20 cm, or by observing possible deviations of the angle from the given value of 90°: a deviation lesser than 10% after 30 minutes is considered as excellent.

The permeability to water vapour is evaluated according to standard ASTM–E–96, and the permeability to other gases according to standard ASTM–D–1434, both at 25°C

The melt index is determined according to standard ASTM–D–1238–65T.

The resistance of the weld of the bonded sheets is measured according to the peeling strength test, evaluating the tensile strength of the weld by means of a dynamometer (for example an Instron dynamometer).

The following examples are given to illustrate this invention without being however a limitation thereof.

Example 1

A bonded sheet was prepared by conveying between rollers heated to 85°C:

A) a polypropylene film bioriented by stretching in the longitudinal and transversal directions, subjected to a treatment with continuous non-perforating electric discharges, coated on one face with a vinyl lacquer consisting of vinyl chloride (87)/vinyl acetate ( 13) copolymer dissolved in methyl-ethyl-ketone, after coating with polyethylene-imine, and metallized under vacuum on the other face with aluminium (surface resistivity = 2 Ohm), and having the following characteristics:

| | |
|---|---|
| — thickness | 25 $\mu$m |
| — longitudinal tensile strength | 13 Kg/mm² (127 M Pa) |
| — transversal tensile strength | 28 Kg/mm² (274 M Pa) |
| — longitudinal elongation | 180% |
| — transversal elongation | 45% |
| — resistance to tearing (Elmendorf) | 11 g/25 $\mu$m |

The polypropylene employed for filming was a polymer having prevailingly isotactic macromolecules, prepared by means of stereospecific catalysts, having a melt index equal to 4, a residue to the extraction with heptane of 96.5%, and an ash content of 75 ppm.

B) Paper of the oiled paper-type, weighing 40 g/m², coated on one face with a vinyl lacquer of the type employed for film A) and then printed on the same face, then coated on both faces with a mixture of ethylene/vinyl acetate copolymer with 50% of a microcrystalline wax, in an amount of 20 g/m².

The metallized face of film A) was contacted with the not printed face of the paper sheet.

The resulting bonded sheet exhibited the following characteristics:

| — thickness | 50 $\mu$m |
|---|---|
| — permeability: | |
|     to oxygen | 75 cm$^3$/m$^2$.24 h.bar |
|     to carbon dioxide | 200 cm$^3$/m$^2$.24 h.bar |
|     to water vapour | 2.5 g/m$^2$.24 h |
| — weldability range | 90°—110°C |
| — resistance of the weld | 250 g/cm (ins./outside) |
| | 150 g/cm (out./outside) |
| — capability to retain the fold | excellent |

Example 2

A bonded sheet was prepared by conveying between rollers heated to 85°C:

A) a polypropylene film bioriented by stretching in the longitudinal and transversal directions, subjected to a treatment with continuous non-perforating electric discharges, coated on both faces with a vinyl lacquer consisting of vinyl chloride/vinyl acetate (87/13) co-polymer dissolved in methyl-ethyl-ketone, after coating with polyethylene-imine, and metallized under vacuum on one face with aluminium (surface resistivity = 1.5 Ohm), having the following characteristics:

| — thickness | 25 $\mu$m |
|---|---|
| — longitudinal tensile strength | 13 Kg/mm$^2$ (127 M Pa) |
| — transversal tensile strength | 28 Kg/mm$^2$ (274 M Pa) |
| — longitudinal elongation | 185% |
| — transversal elongation | 50% |
| — resistance to tearing (Elmendorf) | 11 g/25 $\mu$m |

The polypropylene employed for filming was a polymer having prevailingly isotactic macromolecules, prepared by means of stereospecific catalysts, having a melt index equal to 4, a residue to the extraction with heptane of 96.5% and an ash content of 75 ppm.

B) Paper of the oiled paper-type, weighing 80 g/m$^2$, coated and printed like paper B) in example 1. The metallized face of film A) was in contact with the not printed face of the paper sheet.

The resulting bonded sheet exhibited the following characteristics:

| | |
|---|---|
| — thickness | 80 $\mu$m |
| — permeability to oxygen | 50 cm³/m².24 h. bar |
| — permeability to carbon dioxide | 150 cm³/m².24 h. bar |
| — permeability to water vapour | 2 g/m².24 h |
| — weldability range | 90° — 110°C |
| — resistance of the weld | 250 g/cm (ins./outside) |
| | 200 g/cm (out./outside) |
| — capability to retain the fold | excellent |

Example 3

A bonded sheet was prepared by conveying between rollers heated to 85°C:
A) a polypropylene film bioriented by stretching in the longitudinal and transversal directions, subjected to a treatment with continuous, not-perforating electric discharges, coated on one face with a vinyl lacquer consisting of a vinyl chloride/vinyl acetate (87/31 ) copolymer, dissolved in methyl-ethyl-ketone, after coating with polyethylene-imine, and metallized under vacuum on the other face with aluminium (surface resistivity = 1.5 Ohm), having the following characteristics:

| | |
|---|---|
| — thickness | 25 $\mu$m |
| — longitudinal tensile strength | 12 Kg/mm² (118 M Pa) |
| — transversal tensile strength | 27 Kg/mm² (265 M Pa) |
| — longitudinal elongation | 200% |
| — transversal elongation | 75% |
| — resistance to tearing (Elmendorf) | 13 g/25 $\mu$m |

The polypropylene employed for filming was a mixture consisting for 60% of polypropylene having prevailingly isotactic macromolecules, prepared by means of stereospecific catalysts, having a melt index equal to 5, a residue to the extraction with heptane of 97%, an ash content of 75 ppm, and for 40% of a random crystalline ethylene/propylene copolymer containing 4% of ethylene and having a melt index equal to 10.
B) Paper of the oiled paper-type, weighing 80 g/m², coated, printed and bonded likewise paper B) of example 2.
The resulting bonded sheet exhibited the following characteristics:

| | |
|---|---|
| — thickness | 80 $\mu$m |
| — permeability: | |
| to oxygen | 75 cm³/m².24 h. bar |
| to carbon dioxide | 200 cm³/m².24 h. bar |
| to water vapour | 2.5 g/m².24 h |
| — weldability range | 90°—110°C |
| — resistance of the weld | 250 g/cm<br>200 g/cm |
| — capability to retain the fold | excellent |

Example 4

A bonded sheet was prepared by conveying between rollers heated to 85°C:

A) a polypropylene film bioriented by stretching in the longitudinal and transversal directions, subjected to a treatment with continuous not perforating electric discharges, metallized under vacuum on one face with aluminium (surface resistivity = 1.50 Ohm), then coated on the metallized face with a thermowelding protecting lacquer based on a vinyl chloride/vinyl acetate/maleic anhydride (86/13/1) copolymer, having the following characteristics:

| | |
|---|---|
| — thickness | 25 $\mu$m |
| — longitudinal tensile strength | 13 Kg/mm² (127 M Pa) |
| — transversal tensile strength | 28 Kg/mm² (274 M Pa) |
| — longitudinal elongation | 180% |
| — transversal elongation | 45% |
| — resistance to tearing<br>(Elmendorf) | 11 g/25 $\mu$m |

The polypropylene employed for filming was a polymer having prevailingly isotactic macromolecules, prepared by means of stereospecific catalysts, having a melt index equal to 4, a residue to the extraction with heptane of 96.5%, an ash content of 75 ppm.

The film was coated on its non-metallized face with a polyurethane-based adhesive in an amount of 1.5 g/m² of surface.

B) Paper of the oiled paper-type, weighing 50 g/m², coated on its not bonded face with a lacquer based on a vinyl chloride/vinyl acetate (87/13) copolymer containing 3% of carnauba wax.

The lacquered metallized face of the film constituted the inside part of the bonded sheet. The resulting bonded sheet exhibited the following characteristics:

| | |
|---|---|
| — thickness | 60 $\mu$m |
| — permeability: | |
| to oxygen | 80 cm³/m².24 h. bar |
| to carbon dioxide | 220 cm³/m².24 h. bar |
| to water vapour | 2 g/m².24 h |
| — weldability range | 90°—110°C |
| — resistance of the weld | 300 g/cm (ins./inside) |
| — capability to retain the fold | excellent |

Example 5

A bonded sheet was prepared by exactly repeating example 1, except that for coating paper B) nitrocellulose was employed instead of vinyl lacquer.

The resulting bonded sheet exhibited the following characteristics:

| | |
|---|---|
| — thickness | 75 $\mu$m |
| — permeability: | |
| to oxygen | 75 cm³/m².24 h. bar |
| to carbon dioxide | 200 cm³/m².24 h. bar |
| to water vapour | 2.5 g/m².24 H |
| — weldability range | 90°—110°C |
| — resistance of the weld | 250 g/cm (ins./outside) |
| — capability to retain the fold | excellent |

Example 6

A bonded sheet was prepared by repeating example 1, except that nitrocellulose employed for coating paper B) was substituted by polyvinylidene chloride.

The resulting bonded sheet exhibited the following characteristics:

| | |
|---|---|
| — thickness | 65 $\mu$m |
| — permeability: | |
| to oxygen | 5 cm³/m².24 h.bar |
| to carbon dioxide | 75 cm³/m².24 h.bar |
| to water vapour | 2 g/m².24 h |
| — weldability range | 90°—130°C |
| — resistance of the weld | 250 g/cm (ins./outside) |
| | 50 g/cm (out./outside) |
| — capability to retain the fold | excellent |

Example 7

A bonded sheet was prepared by conveying between rollers heated to 60°C:
A) a polypropylene film biloriented by stretching in the longitudinal and transversal directions, subjected to a treatment with continuous non-perforating electric discharges, coated on one face with a vinyl lacquer consisting of a vinyl chloride/vinyl acetate (87/13) copolymer dissolved in methyl-ethyl-ketone, after coating with polyethylene-imine, and metallized under vacuum on the other face with aluminium (surface resistivity = 2 Ohm), having the following characteristics:

| — thickness | $18 \, \mu m$ |
| — longitudinal tensile strength | 13 kg/mm² (127 M Pa) |
| — transversal tensile strength | 28 kg/mm² (274 M Pa) |
| — longitudinal elongation | 150% |
| — transversal elongation | 50% |
| — resistance to tearing (Elmendorf) | 10 g/25 $\mu m$ |

The polypropylene employed for filming was a polymer having prevailingly isotactic macromolecules, prepared by means of stereospecific catalysts, having a melt index equal to 3, a residue to the extraction with heptane of 96.5%, an ash content of 75 ppm. The film was coated on its metallized face with a polyurethane-based adhesive in an amount of 1.5 g/m² of surface.
B) Paper of the oiled paper-type, weighing 60 g/m², lacquered on one face with a vinyl lacquer of the same type as employed for film A) in example 1, and then printed on on said lacquered face.
The adhesive-coated face of film A) was in contact with the non-lacquered face of the paper sheet.
The resulting bonded sheet was then treated on its inside face, constituted by the lacquered face of polypropylene film A), with a cold adhesive based on a mixture of natural rubber latex and of acrylic dispersions (1:1) in an amount of 4 g/m₂, and on its outside face with a tackiness-preventing silicone agent.
The resulting bonded sheet exhibited the following characteristics:

| — thickness | $75 \, \mu m$ |
| — permeability: | |
| to oxygen | 100 cm³/m².24 h. bar |
| to carbon dioxide | 250 cm³/m².24 h. bar |
| to water vapour | 3 g/m².24 h |
| — weldability range | 30°—50°C |
| — resistance of the weld | 200 g/cm (ins./inside) |
| — capability to retain the fold | excellent |

Example 8

A bonded sheet was prepared by conveying between rollers heated to 60°C:
A) a polypropylene film biloriented by stretching in the longitudinal and transversal directions, subjected to a treatment with continuous non-perforating electric discharges, printed on one face and then metallized under vacuum on the same face with aluminium (surface resistivity = 1.5 Ohms), having the following characteristics:

EP 0 038 022 B2

| | |
|---|---|
| — thickness | 25 $\mu$m |
| — longitudinal tensile strength | 13 Kg/mm² (127 M Pa) |
| — transversal tensile strength | 28 Kg/mm² (274 M Pa) |
| — longitudinal elongation | 150% |
| — transversal elongation | 45% |
| — resistance to tearing (Elmendorf) | 11 g/25 $\mu$m |

The polypropylene employed for filming was a polymer having prevailingly isotactic macromolecules, prepared by means of stereospecific catalysts, having a melt index equal to 4, a residue to the extraction with heptane of 96.5%, an ash content of 75 ppm. The film was coated on its metallized face with a polyurethane-based adhesive in an amount of 1.5 g/m² of surface.

B) Paper of the parchment type, weighing 40 g/m², coated on its not bonded face with a thermowelding vinyl lacquer (1.5 g/m²), of the same type as utilized for film A) of example 1.

The lacquered face of the paper constituted the inside of the bonded sheet.

The resulting bonded sheet exhibited the following characteristics.

| | |
|---|---|
| — thickness | 50 $\mu$m |
| — permeability: | |
| to oxygen | 75 cm³/m².24 h. bar |
| to carbon dioxide | 250 cm³/m².24 h. bar |
| to water vapour | 2.5 g/m².24 h |
| — weldability range | 90°—130°C |
| — resistance of the weld | 250 g/cm (ins./inside) |
| — capability to retain the fold | excellent |

## Claims

1. A bonded sheet comprising two layers and, optionally, an interposed adhesive layer, one of said layers consisting of a polyolefinic film metallized on at least one face, the metallization having a resistivity of from 1 to 5 Ohms and the other layer consisting of a paper or paperboard sheet, characterized in that said paper or paperboard sheet is coated on at least one face with nitrocellulose or a vinyl or vinylidene lacquer.

2. A bonded sheeet according to claim 1, in which the polyolefinic film, optionally orientedby stretching, prepared from isotactic polypropylene having a melt index of from 0.5 to 20, from polyethylene having a melt index of from 0,5 to 15, from propylene-ethylene thermoplastic copolymers having a melt index of from 1 to 20 or from mixtures thereof.

3. A bonded sheet according to claim 1 or 2, in which the metallized layer consists of aluminium.

4. A bonded sheet according to any of the preceding claims, in which at least one of the two outside surfaces is coated with a welding layer.

## Patentansprüche

1. Verbundfolie, umfassend zwei Schichten und gegebenenfalls eine dazwischenliegende Klebstoffschicht, wobei eine der Schichten aus einem Polyolefinfilm besteht, der auf mindestens einer Seite mit einer Metallisierung mit einem spezifischen Widerstand von 1 bis 5 Ohm versehen ist, und die andere Schicht aus

einem Papier- oder Kartonbogen besteht, dadurch gekennzeichnet, daß der Papier- oder Kartonbogen auf mindestens einer Seite mit Nitrocellulose oder einem Vinyl- oder Vinylidenlack beschichtet ist.

2. Verbundfolie nach Anspruch 1, worin der Polyolefinfilm ein gegebenenfalls durch Strecken orientierter Film ist, hergestellt aus isotaktischem Polypropylen mit einem Schmelzindex von 0,5 bis 20, aus Polyethylen mit einem Schmelzindex von 0,5 bis 15, aus thermoplastischen Propylen-Ethylen-Copolymeren mit einem Schmelzindex von 1 bis 20 oder aus Gemischen davon.

3. Verbundfolie nach Anspruch 1 oder 2, worin die metallisierte Schicht aus Aluminium besteht.

4. Verbundfolie nach irgendeinem der vorangehenden Ansprüche, worin mindestens eine der beiden äußeren Oberflächen mit einer Schweißschicht beschichtet ist

## Revendications

1. Une feuille composite formée de deux couches, et éventuellement d'une couche adhésive intermédiaire, l'une des deux couches étant formée d'une pellicule polyoléfinique métallisée sur au moins une de ses faces, la couche métallisée ayant une résistivité de 1 à 5 Ohms, et en ce que l'autre couche est formée d'une feuille de papier ou de carton, caractérisée en ce que ladite couche de papier ou carton est revêtue sur au moins une face de nitrocellulose ou d'une laque de vinylidène ou de vinyle.

2. Une feuille composite conformément à la revendication 1, dans laquelle la pellicule polyoléfinique est une pellicule, éventuellement orientée par étirage, préparée à partir de polypropylène isotactique présentant un indice de fusion compris entre 0,5 et 20, de polyéthylène présentant un indice de fusion compris entre 0,5 et 15, de copolymères thermoplastiques propylène/éthylène ayant un indice de fusion compris entre 1 et 20, ou de leurs mélanges.

3. Une feuille composite conforme à la revendication 1 ou 2, dans laquelle la couche métallisée est formée d'aluminium.

4. Une feuille composite conformément à l'une quelconque des revendications précédentes, dans laquelle au moins une des deux surfaces externes est revêtue d'une couche de soudage.